# EUROPEAN PATENT APPLICATION

(11) **EP 4 524 838 A1**
(43) Date of publication of application: **19.03.2025**
(21) Application number: 23197454.4
(22) Date of filing: 14.09.2023
(51) Int. Cl.: G06Q 10/00, G05B 19/418, G06Q 10/0633

(54) **METHODS AND SYSTEMS FOR ASYNCHRONOUSLY PERFORMING A TASK RELATED TO AN ASSET LOCATED AT A WORKSPACE AT A SHOPFLOOR OF AN INDUSTRIAL FACILITY**

(71) Applicant: Siemens Aktiengesellschaft, 80333 München (DE)
(72) Inventor: Roux, Armin, 91315 Höchstadt a. d. Aisch (DE)
(74) Representative: Siemens Patent Attorneys

(57) **Abstract**

Method for asynchronously performing a task related to an asset located at a workspace at a shopfloor of an industrial facility, the method comprising:
- creating (101) a content related to a task to be performed at a workspace at a shopfloor of an industrial facility,
- contextualizing the content, so that the contextualized content comprises a taskflow (105, 217) allowing to complete the task at the workplace (107, 202, 200),
- uploading the content to a computer platform (108, 209),
- at the computer platform (108, 209), upon receiving a request from a device located at the workplace (107, 202, 200), wherein the request is related to the task, providing an access to the taskflow (105, 217),
- executing the taskflow (105, 217) at the device to complete the task at the workplace (107, 202, 200).

## Description

The subject-matter disclosed herein relates to methods and systems for asynchronously performing a task related to an asset located at a workspace at a shopfloor of an industrial facility.

There is a lack of workforce & specialist worldwide and as well as the pandemic has already long-lasting structural changes that will affect up to 1.5 billion jobs within the next decade. But today there is a huge skill gaps for digitalization of thousands of thousands processes and task in the manufacturing. Moreover, there is not any specific learning content for blue color staff based on the tasks which should be done at their workplace, and they must overcome a lot of technological barriers and obstacles during working hours to learn in the context of their specific tasks and it is one of the reasons for failing 70 - 85 % of digital transformations programs in companies.

Therefore, there is a need for methods and systems for assisting work in order to increase the productivity and performing tasks related to industrial assets at the automation facility. The object of the present invention is to provide such methods and systems.

The object is met by the above-mentioned method. The method starts with creating, e.g., by a human, a content related to a task to be performed at a workspace at a shopfloor of an industrial facility. The content can be machine-readable content. In other words, the optionally machine-executable content describes a possible (technical and functional) solution to the task.

In an embodiment, the content can be generated automatically, e.g., by an AI-powered engine, e.g., by 3D data of asset such as a machining tool, and/or asset-related documentation, e.g., an OEM-created product documentation.

The created content is then contextualized, so that the contextualized content comprises a taskflow allowing to complete the task at the workplace. In an embodiment, the taskflow can comprise a sequence of preferably interrelated steps, which can be carried out by a user or fully automatically at the workspace, e.g., at or in the asset such as a machine tool or its control unit, located at the workplace, and allow to perform and preferably to complete the task.

The task can be, e.g., an evidence-base and/or transactional task. The term "evidence-based" concerns the circumstance that there is a confirmation process prior to execution of the task that confirms that the task can be actually performed. i.e., that there are no obstacles in performing the task such as missing tool or part, or non-availability of a machine, e.g., a machine tool, etc.

The contextualized content is then uploaded to a computer platform.

Upon receiving a request, which is related to the task, from a device located at the workplace at the computer platform, wherein the request, an access to the taskflow is provided. In an embodiment, the request comprises a question how to perform the task and/or how to achieve a result that is achieved, when the task is completed.

When the taskflow from the computer platform is received at the device, the taskflow is executed, e.g., automatically executed, e.g., self-executed at the device to complete the task at the workplace, e.g., at or in the asset such as a machine tool or its control unit, located at the workplace.

In an embodiment, the device is an AI-based robotic system, adapted to execute the taskflow. In an embodiment, the device can comprise an intelligent bot embedded into a control unit, e.g., a controller, for managing the (technical and functional) taskflow and scheduling the (technical and functional) task asynchronously in the asset, e.g., machine tool.

A "functional taskflow" refers to a systematic and organized series of steps or activities designed to achieve a specific functional goal.

In an embodiment, the taskflow comprises one or more interactional, e.g., haptic, preferably tactile and, e.g., transactionally executable task that may involve interactions with one or more objects located at the workplace.

In an embodiment, the content comprises one or more images of the one or more objects located at the workplace.

In an embodiment, the device is an AR-enabled device, and the contextualizing comprises creating/generating in the content, one or more AR-artifacts and anchoring the AR-artifacts to the respective objects represented in the content. In an embodiment, when the content already comprises one or more AR-artifacts the method can comprise navigating through and/or searching for respective AR-artifacts and anchoring them to the respective objects to create the executable taskflow.

In an embodiment, the method further comprises:
- providing the content with a soundtrack providing voice instructions for haptic interactions with one or more objects.

In an embodiment, the method further comprises:
- connecting the device to the computer platform,
- verifying the device and/or a user operating the device at the computer platform.

In an embodiment, the request comprises information about access rights, with which the taskflow is allowed to be accessed and/or executed from the device and the access is granted with the respective access rights.

In an embodiment, the method further comprises:
- querying a database comprising a plurality of contents, wherein the contents in the database are classified at least according to taskflows, and
- classifying the content according to the taskflow (105).

In an embodiment, the task is a commissioning, operating, maintenance, inspection, repair task, or a combination thereof. E.g., such repair / maintain / operation task can be completed by an executable taskflow, which causes the machine to self-repair / -maintain / -operate, etc.

In an embodiment, the content is related to one or more interrelated tasks and the contextualized content comprises a workflow allowing to complete a process comprising the one or more interrelated tasks at the workplace.

The object is also met by the above-mentioned system comprising a first device adapted to create a content at a workspace at a shopfloor of an industrial facility, a second device adapted to contextualize the content, so that the contextualized content comprises a taskflow allowing to complete the task at the workplace, and to upload the content to a computer platform, wherein the computer platform adapted to, upon receiving a request from a third device located at the workplace, wherein the request is related to the task, provide an access to the taskflow, and a third device adapted to execute the taskflow to complete the task at the workplace.

FIG 1 shows a flowchart of a method of performing a task at a workspace at a shopfloor of an industrial facility,
FIG 2 shows an architecture according to one aspect of the present invention.

The reference signs used in the figures and in the claims are used for demonstrative purposes and shall not be considered as a limitation of corresponding claim features.

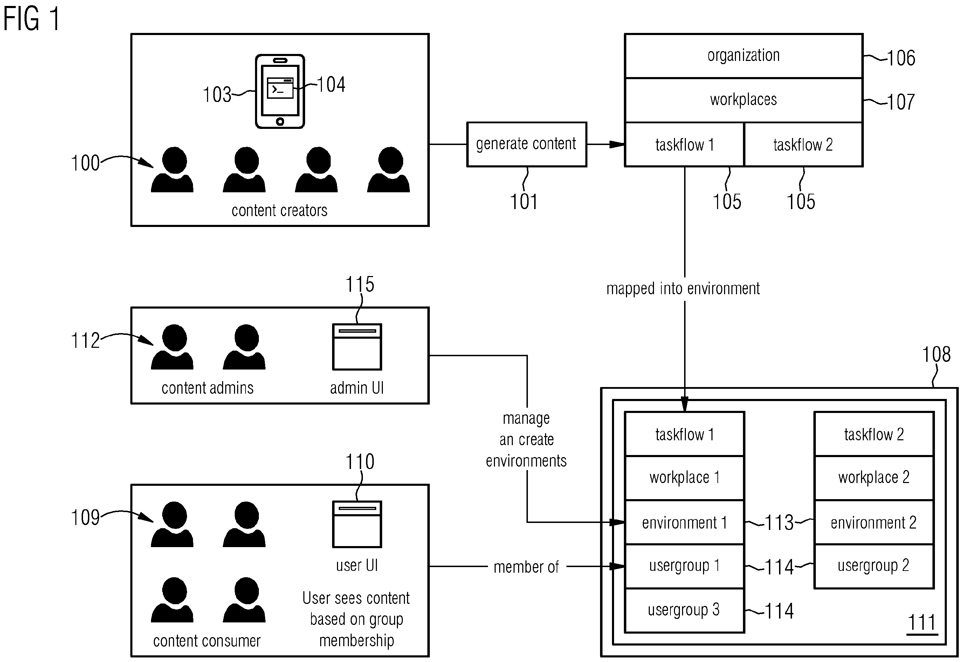

FIG 1 illustrates an example of a method according to one aspect of the invention. The illustrated method is carried out in the context of human- or machine-machine-link collective cooperation at the shopfloor of an industrial plant.

In other words, the above-mentioned concept of cooperation refers not only to a collaborative approach where machines (artificial intelligence, robots, or other automated systems), interconnected devices and sometimes humans work together as a collective unit to achieve common goals or solve complex problems but also to autonomous systems that are adapted to complete tasks by using their different functionalities through interaction mechanism. Such tasks can be but not limited to self-repairing, -calibration, cleaning or maintaining.

In advanced, in particular, autonomous manufacturing environments, humans and/or AI-based robotic systems can collaborate with robots and/or automated systems on the shop floor. Robots handle repetitive and dangerous tasks, while humans and/or AI-based robotic system can operate, manage, and monitor taskflows of different complexity, e.g., for maintaining and operating different task in the machines, or even make critical decisions.

FIG 1 illustrates an environment, where a group of content creators 100 generate 101 a content that relates to one or more tasks to be performed at a workspace at a shopfloor of an industrial facility. The one or more tasks can relate to different machines, e.g., machine tools, in particular CNC machines, products and so on.

In general, the one or more tasks related to one or more assets of the industrial facility that are located at the respective workplace.

For example, the content can be created a human by using a device with a digital camera, preferably a portable or mobile device 103, such as smartphone or tablet or alike, equipped with a respective software application 104 allowing the content creators 100 to capture image and especially video data of the workspace to navigate through the process of performing the respective task at the workspace.

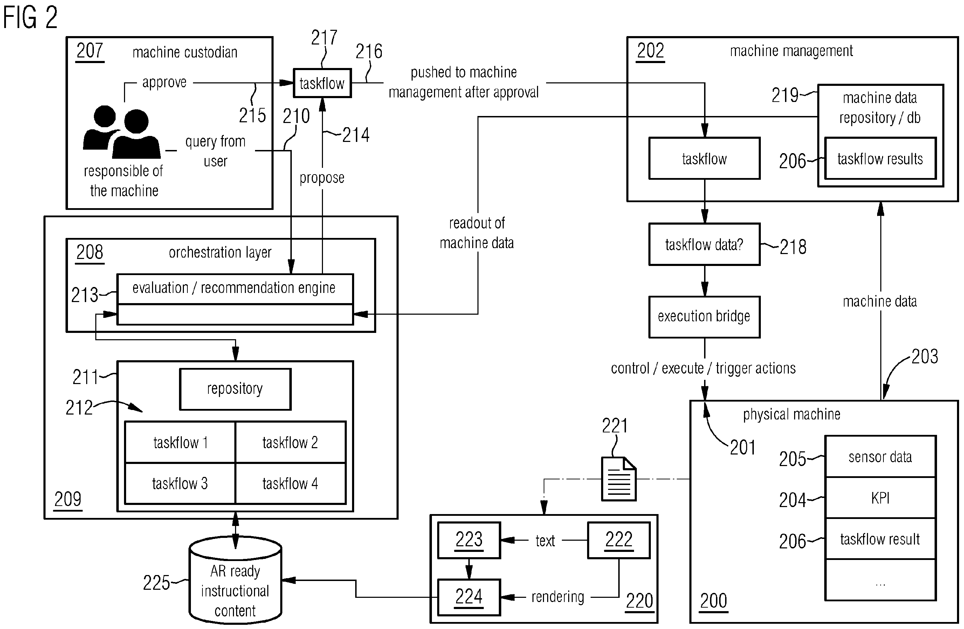

Alternatively or additionally, a content creator does not need to be a human person, it can be an autonomous system (see FIG 2), e.g., an AI-based robotic system (AI for Artificial Intelligence). Such AI-based robotic systems can monitor production at the shopfloor by overseeing assets of the automation system that carries out the production process. It can be upgraded and activated for different functionalities and capabilities for performing different tasks.

After the content is generated, it can be stored, e.g., on the respective device 103 or sent to a computer platform, which can be local or private computer platform, e.g., a server in a private cloud platform, for contextualization.

The recorded content is contextualized, so that after the contextualization it comprises one or more taskflows 105, which allow to perform and in particular to complete the tasks at the workplace.

In an embodiment, the task can be a commissioning, configuration, functional new features, operating, maintenance, inspection, repair and retrofit task, or a combination thereof.

In an embodiment, the task can comprise haptic, preferably tactile interactions with one or more objects located at the workplace.

The IT infrastructure can comprise an orchestration service that preferably supports an orchestration-service-specific behavior pattern, for asynchronously performing tasks and processes, e.g., evidenced-based tasks. The orchestration layer can support and facilitate interactional, interventional and transactional persisted process for instance haptic, and tactile with or without self-executable mechanisms for performing to one or more objects located at the workplace.

The objects can be a part of the workplace, for example, a component or a tool, such as a screwdriver, or alike. The objects can also be a part of automation system assets located at the workplace, for example, a robot, a CNC machine or a part of it, a converter or a part of it, etc. For example, the objects can be designed as inverters, electric motors, machine axis, machine tools, control units, etc. and parts thereof.

One or more tasks, to which the created content relates to, can be interrelated, so that the contextualized content can comprise a workflow allowing to complete a process comprising the one or more interrelated tasks at the workplace.

In general, a task- or workflow relates to a series, a sequence of steps, wherein each step represents a process or an activity. It can comprise an orchestrated and repeatable pattern that allow to transform, communicate, guide, and provide dedicated materials, data, services, skills, information, or knowledge. However, the workflow and taskflow have distinct meanings and implications.

Workflow usually covers an entire process from the initial request to the final output. The tasks in a workflow are interrelated, and the completion of one task usually triggers the start of the next one.

A taskflow focuses on a specific sequence of activities that a human or a robotic system or a team thereof performs to complete a particular task. It is more granular than a workflow and highlights the detailed steps involved in completing one aspect of a broader process.

In other words, the taskflows 105 can provide a sequence of instructions to a human and/or of machine-readable instructions that can be executed automatically, e.g., by an AI-based robotic system, so the respective taskflows 105 are performed to complete one or more tasks.

Each executable taskflow 105 is a digital asset. Such digital assets can be used for leveraging brownfield industrial assets by extending such industrial assets with this digital assets and hence facilitating their functionality.

Thus, the contextualization provides workplace-specific labeling context for the content that allows to perform the one or more tasks at the workplace.

The contextualization can comprise providing metadata for the content, e.g., name of the organization 106 for which the production task at the shop floor is being performed, the identification of the workplace 107. Further metadata can be provided in form of information regarding authentication, authorization, identification, IP security etc.

After the contextualization the content is uploaded to a global computer platform 108, e.g., to a global cloud platform.

The local computer platform or the local cloud platform are preferably accessible only to the organization that the industrial plant belongs to, whereas the global computer platform 108 can be in principle reached by any user with a web-enabled device over the Internet.

The created content can be accessed by one or more content consumers 109 by placing a respective request to the global computer platform 108. The content consumers 109 can be humans or AI-based robotic systems that need to perform the at least one activity related to the one or more objects at the respective workplace. The request related to the content and/or to the one or more objects can be sent to the global computer platform 108 by a user, e.g., using a handheld device or by the AI-based robotic system itself.

Upon receiving the request from the device or from the AI-based robotic system located at the workplace the global computer platform 108 provides an access to the content to the device or to AI-based robotic system. In an embodiment, the access is provided after the identification and authorization of the device or the AI-based robotic system.

In an embodiment, the access is provided according to one or more access rights.

Providing access to the content can be subject to certain conditions. While the device is trying to connect to the global computer platform 108, the global computer platform 108 can ask and verify for user's, device's and/or AI-based robotic system's credentials.

Providing the access can comprise a token-based identification.

The user's device can comprise a user interface 110 to access the content from the global computer platform 108.

After the access to the content is provided to the user or to the AI-based robotic system it can be executed to provide instructions for performing the object-related task / function activities, which is done either by the user, guided by the steps or instructions contained in the dedicated taskflow, or by the AI-based robotic system, which executes the respective machine-readable instruction steps of the taskflow.

In an embodiment, the device can be an AR-enabled device (AR for the Augmented Reality). In this case it can be advantageous, if the contextualizing comprises creating / generating, in the content, one or more AR-artifacts, for example arrows, bonding boxes, and alike, and anchoring the AR-artifacts to the respective objects represented in the content. The augmentation can also involve tagging the objects, for example, providing AR-artifacts with text comments etc. this can improve the quality of guiding the user through the task.

In the context of the present disclosure, an AR-artifact refers to a virtual element that is overlaid onto the images or videos of the real-world environment contained in the content. In AR, these artifacts are computer-generated graphics or images, animations, 3D models, or other data, that users can see and interact with through the AR-enabled devices, such as smartphones, tablets, smart glasses, or AR headsets.

AR artifacts are designed to enhance the user's perception of the real world by adding additional contextual information, visual cues, taskflow instructions, or interactive elements to the physical environment. In general, these digital overlays can be informative, functional, or even entertaining, depending on the purpose of the AR experience. In the context of the present disclosure, the AR artifacts are informative or functional, because the task can consist in performing a technical function on and/or at an asset, e.g., a machine tool or an automated guided vehicle, of a robot and the like. Hence the executable taskflow can consist in performing a technical process.

In other words, FIG 1 illustrates an example for operating, e.g., autonomously operating a machine in the shopfloor of an industrial facility, where asynchronous reality is provided as a service (Function or Taskflow (as a digital asset) as a Service) for human- or machine-machine-link collective-cooperation.

In an embodiment, the method can further comprise providing the content with a soundtrack, the soundtrack relating to the AR-artifacts and to the respective task instructions.

The soundtrack can comprise voice instructions, for example, in different languages, associated to the visual instructions already contained in the workflow.

The local cloud platform can comprise a speech-to-text module and a text-to-speech module to facilitate translation of the soundtrack into different languages. For example, once the voice instructions have been recorded by a content creator 100, for example at the local cloud platform, the local cloud platform can use the speech-to-text module to produce the respective text, use a translation module to translate the text into other language or languages and, finally, use the text-to-speech module two produce a soundtrack for the content in a different language.

In summary, the contextualized content can comprise an augmented,e.g., machine-readable and preferably functional taskflow, which can include audio and/or visually augmented instructions, e.g., transactional and/or self-executable instructions. E.g., the instructions in the taskflow can be augmented with dedicated data, annotated text, pictures, video, any format documents, with or without a soundtrack. Creating or recording the content without any soundtrack has an advantage within the manufacturing environment as it can be very loud at the shopfloor, and it can be added manually for each workflow in the quite office environment.

The global cloud platform 108 can comprise a database 111. The database 111 can comprise a plurality of contents, wherein the contents in the database 111, can be classified according to the taskflows, workspaces, environments, etc.

The method can further comprise querying the database 111 to classify the generated content according to the taskflows 105.

In an embodiment, the access to the content at the computer platform 108 can be granted with different access rights. As described above the content creators 100 can have access to create content, whereas content consumers 109 can have access only to consume some content from the computer platform 108. It will be appreciated by the skilled person that, e.g., the content creators 100 can also have content consumers' access rights to the content at the computer platform 108.

In an embodiment, there are content administrators 112 that can manage, adapt, change the created content. For example, the content admins 112 can classify, enhance, shorten the content. They also can put the content into a different context, e.g., by embedding the taskflow into a production or manufacturing domain, which is different from the domain or environment 113, for which the taskflow has been created.

The content admins 112 can also create domains or environments and associate the taskflow to the newly created domains.

Moreover, the content admins 112 can determine whether or not one or more tasks are interrelated and connect the respective taskflows to a workflow.

The content admins 112 can be designed as modules comprising machine learning algorithms for performing one or more functions described above.

Associating the taskflow to the respective domain 113 or domain environment can also be performed by the content creators at the local cloud platform.

The content admins 112 can also manage the access rights 114 for respective taskflows. For example, some taskflows can be accessible only to content creators 100 ("usergroup 1") and two content consumers 109 ("usergroup 3") and some taskflows can be accessible to content admins 112 ("usergroup 2") only.

The content admins 112 can access the computer platform 108 remotely. For this they can be provided with an admin UI (UI for User Interface) 115.

FIG 2 shows an architecture diagram according to one aspect of the present invention.

The architecture comprises a physical asset 200 of an automation system, for example a CNC machine. The physical machine 200 comprises one or more interfaces, e.g., data buses, which are configured to receive and/or provide data. For example, the physical machine 200 comprises a first data interface 201 adapted to receive data from a machine management system 202. The physical device 200 can also comprise a second data interface 203 adapted to provide data from the physical asset 200.

The physical machine 200 can comprise or provide static data, for example KPIs 204 related to an industrial process such as fracturing process carried out the machine 200, and dynamic data, for example sensor data 205, operation parameters, etc.

The physical device 200 is adapted to execute machine-readable taskflows that can be received over the first data interface 201. When such machine-readable taskflow is completed a taskflow result 206 is produced.

The physical asset 200 is communicatively connected to the asset management system 202 comprising user interfaces to operate, control, manage the asset 200. For example, if the asset is designed as a CNC machine, e.g., a machine tool, the management system 202 can comprise an HMI (HMI for Human Machine Interface).

Via the asset management system 202 taskflows can be performed on the physical machine 200. For example, a first data interface 201 can used to receive respective commands from the taskflows. The second data interface 203 of the asset 200 is used to provide asset or machine data.

The machine data can comprise taskflow results 206, KPIs 204, sensor data 205, operational parameters of the CNC machine, etc.

A machine custodian 207 can oversee the operation and/or monitor the condition of the machine 200. It 207 can control the machine 200 via the machine management system 202.

To perform specific tasks at the machine 200 or to use one or more machine's functions to perform tasks with the aid of the machine 200 the machine custodian 207 can query an orchestration layer 208 of a computing platform 209 by sending a task- and machine-specific request or question 210.

The request can be formulated in form of a simple human readable, not machine-readable text. The request can also comprise a voice recording of the question. The request can also comprise machine executable instructions.

The platform 209 can be designed is a global cloud platform 108 of FIG 1.

The platform 209 can comprise a repository 211 adapted to store one or more taskflows 212 classified according to their content.

In other words, the repository 211 can be designed as the database 111 of FIG 1 and comprise taskflows according to the content, workplaces, environments (working conditions), access rights, etc.

To facilitate the communication to the machine custodian 207 the orchestration layer 208 can comprise an evaluation and recommendation engine 213.

The evaluation and recommendation engine 213 is communicatively connected to the repository 211 and is configured to bring the content (from repository 211) and the context (from the question 210) together.

Upon receiving the request 210 the evaluation and recommendation engine 213 reads and analyzes the request 210 to interpret information regarding the task to be performed at the asset 200 contained in the request 210 and to determine the respective context.

Based on the interpretation of the request 210, the evaluation and recommendation engine 213 queries the repository 211 for one or more respective taskflows and recommends 214 them to the machine custodian 207.

If the machine custodian 207 approves 215 the recommended taskflow or recommended taskflows, it either sends 216 the approved taskflow(s) 217 to the machine management system 202, if the corresponding taskflow 217 comprises machine executable instructions only or operates the asset management system 202 according to the instructions in the taskflow 217.

The taskflow(s) 217 is(are) a digital asset(s) that can be used as extension(s) of the respective asset 200 or of the asset management system 202. In other words, if the asset custodian 207 has the same task in the future, it doesn't need to place the corresponding request 210 to the computer platform 209, if the asset management system 202 had been already extended by the respective taskflow 217.

As explained above, the machine management system 202 can communicate with the machine 200 over an execution bridge 218 allocated to the first data interface 201.

The execution bridge 218 continuously analyzes the data that it receives from the machine management system 202. If the execution bridge 218 determines that the received data comprises taskflow data describing the approved taskflow(s) 217, it causes and execution of the approved taskflow(s) 217 at the machine 200. This can comprise controlling, triggering of respective actions contained in the approved taskflow(s) 217.

The machine data from a machine data repository 219 of the machine management system and especially the taskflow result 206 produced by the machine 200 can be provided to the evaluation and recommendation engine 213 to facilitate the choice of the appropriate taskflow(s) 212 from the repository 211.

In an embodiment, the content generation can be performed and/or supported by an AI-engine 220. The AI-engine 220 may receive data 221 related to the physical machine 200.

The data 221 can comprise operating instructions, assembly instructions, comprising e.g., CAD-data related to the geometry of the physical machine and its parts, maintenance instructions, repair instructions, etc. The instructions are preferably digital and/or digitalized (e.g., by an OCR) instructions.

The AI-based engine 220 can comprise a software module 222 for creating electronic work instructions based on the CAD-data that can be designed as machine-readable taskflows. The software module can support or comprise a CAD/CAM/CAE software such as NX.

The AI-based engine 220 can further comprise an AI-model for creating sequences of voice/and or text instructions. The AI-model can be based on a large language model (LLM).

Differently formulated, the AI-based engine 220 is designed to perform rendering of CAD-data related to the physical machine 200 to create a sequence of visual instructions to perform the task and to augment each step of the sequence with the respective voice and/or text instructions.

For bringing together text and rendered images and for creating digital assets in form of AR-ready, preferably machine-executable taskflows the AI-based engine 220 can comprise an AR-module 224.

The generated digital assets can be stored in a database 225, which can be supported by or to be accessed from the computer platform 209 and in particular from the taskflow repository 211.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. Method for asynchronously performing a task related to an asset located at a workspace at a shopfloor of an industrial facility, the method comprising:
- creating (101) a content related to a task to be performed at a workspace at a shopfloor of an industrial facility,
- contextualizing the content, so that the contextualized content comprises a taskflow (105, 217) allowing to complete the task at the workplace (107, 202, 200),
- uploading the content to a computer platform (108, 209),
- at the computer platform (108, 209), upon receiving a request from a device located at the workplace (107, 202, 200), wherein the request is related to the task, providing an access to the taskflow (105, 217),
- executing the taskflow (105, 217) at the device to complete the task at the workplace (107, 202, 200).

2. Method of claim 1, wherein the device is designed as an AI-based robotic system, adapted to execute the taskflow (105, 217).

3. Method of claim 1 or 2, wherein the taskflow comprises one or more interactional action processes involving one or more objects located at the workplace.

4. Method of claim 3, wherein the content comprises one or more images of the one or more objects located at the workplace.

5. Method of claim 4, wherein the device is an AR-enabled device, and the contextualizing comprises creating/generating, in the content, one or more AR-artifacts and anchoring the AR-artifacts to the respective objects represented in the content.

6. Method of any one of claims 3 to 5, further comprising:
- providing the content with a soundtrack providing voice instructions for haptic interactions with one or more objects.

7. Method of any one of claims 1 to 6, further comprising:
- connecting the device to the computer platform,
- verifying the device and/or a user operating the device at the computer platform.

8. Method of any one of claims 1 to 7, wherein the request comprises information about access rights (114), with which the taskflow is allowed to be accessed and/or executed from the device and the access is granted with the respective access rights (114).

9. Method of any one of claims 1 to 8, further comprising:
- querying a database comprising a plurality of contents, wherein the contents in the database are classified at least according to taskflows, and
- classifying the content according to the taskflow (105).

10. Method of any one of claims 1 to 9, wherein the task is a commissioning, configuration, operating, maintenance, inspection, repair task, or a combination thereof.

11. Method of any one of claims 1 to 10, wherein the content is related to one or more interrelated tasks and the contextualized content comprises a workflow allowing to complete a process comprising the one or more interrelated tasks at the workplace.

12. System for asynchronously performing a task related to an asset located at a workspace at a shopfloor of an industrial facility, the system comprising
- a first device (103) adapted
to create a content at a workspace at a shopfloor of an industrial facility,
- a second device adapted
to contextualize the content, so that the contextualized content comprises a taskflow (105, 217) allowing to complete the task at the workplace (107, 202, 200), and
to upload the content to a computer platform (108, 209),
- the computer platform (108, 209) adapted
to, upon receiving a request from a third device located at the workplace (107, 202, 200), wherein the request is related to the task, provide an access to the taskflow (105, 217), and
- a third device adapted
to execute the taskflow (105, 217) to complete the task at the workplace (107, 202, 200).
